# EUROPÄISCHE PATENTSCHRIFT

(11) **EP 3 968 506 B1**
(45) Veröffentlichungstag und Bekanntmachung des Hinweises auf die Patenterteilung: **26.07.2023**
(21) Anmeldenummer: 20195998.8
(22) Anmeldetag: 14.09.2020
(51) Int. Cl.: H02M 3/156, H02M 3/335

(54) **SYSTEM UND VERFAHREN ZUR REGELUNG EINES SCHALTWANDLERS**
METHOD AND SYSTEM FOR CONTROLLING A SWITCHING CONVERTER
SYSTÈME ET PROCÉDÉ DE RÉGULATION D'UN CONVERTISSEUR CONTINU-CONTINU

(43) Veröffentlichungstag der Anmeldung: 16.03.2022
(73) Patentinhaber: Siemens Aktiengesellschaft, 80333 München (DE)
(72) Erfinder: Hallak, Jalal, 1220 Wien (AT)
(74) Vertreter: Siemens Patent Attorneys

(56) Entgegenhaltungen:
- CN-A- 109 067 213
- CN-A- 111 490 681
- US-A1- 2011 182 088
- US-A1- 2011 317 459
- US-A1- 2019 252 966
- US-B2- 9 083 250
- Siemens: "Quasi-Resonant PWM Controller ICE2QS03 Datasheet", , 4. Juli 2011 (2011-07-04), Seiten 1-19, XP055779872, Gefunden im Internet: URL:https://www.infineon.com/dgdl?fileId=d b3a304325305e6d012566b50ebd7070 [gefunden am 2021-02-25]

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen. Im Speziellen bezieht sich die vorliegende Erfindung auf ein System und ein Verfahren zur Regelung eines Schaltwandlers mit zumindest einem Schaltelement, wobei der Schaltwandler in einem quasiresonanten Betrieb betrieben wird und das zumindest eine Schaltelement des Schaltwandlers in einem eingeregelten Zustand des Schaltwandlers mit einer vorgegebenen, stabilen Schaltfrequenz geschaltet wird. Dabei wird ein Einschaltzeitpunkt des Schaltelements durch ein Schaltsignal einer Schaltreglereinheit vorgegeben, welches durch Erreichen bzw. Überschreiten eines Einschaltschwellwertes durch ein Sägezahnsignal erzeugt wird. Dabei ist das Sägezahnsignal mit einem Valley-Erkennungssignal beaufschlagt, wodurch der Einschaltzeitpunkt des zumindest einen Schaltelements in ein Valley einer am abgeschalteten Schaltelement anliegenden, schwingenden Spannung fällt. Weiterhin betrifft die Erfindung ein Regelsystem zur Durchführung des erfindungsgemäßen Verfahrens.

### Stand der Technik

Schaltwandler werden in vielen Bereichen (z.B. Automatisierung, Automotivbereich, etc.) eingesetzt und bezeichnen Techniken zur Spannungs- und/oder Stromwandlung als Basis für eine Versorgung einer Last bzw. eines Verbrauchers, wie z.B. eines elektrischen Geräts oder einer Baugruppe mit einer meist konstanten und häufig vorgebbaren Spannung. Dazu wird vom Schaltwandler üblicherweise eine Eingangsspannung (z.B. eine aus einer Stromquelle stammende Gleich- oder Wechselspannung) in eine konstante Ausgangsspannung umgewandelt. Eine Konstanz der Ausgangsspannung wird üblicherweise durch Steuerung eines Energieflusses erreicht, welcher mithilfe von zumindest einem periodisch taktenden bzw. arbeitenden Schaltelement und mithilfe zumindest eines Energiespeichers (z.B. Spule, Transformator, Kondensator) gesteuert wird. Je nach Anwendung können für die Stromversorgung einer Last unterschiedliche Schaltwandler-Topologien (z.B. Tiefsetzsteller, Hochsetzsteller, Tief-Hochsetzsteller, Sperrwandler, etc.) zum Einsatz kommen, um eine Ausgangsspannung größer, kleiner oder gegebenenfalls gleich der Eingangsspannung zu erzeugen.

Schaltelemente, wie z.B. Transistoren, enthalten ebenso wie Spulen, Transformatoren oder Drossel parasitäre Kapazitäten, welche bei so genannten hart schaltenden Wandlern (d.h. bei Wandlern mit fixer Schaltfrequenz) zu Schaltverlusten und/oder Störaussendungen (z.B. in Form von Geräuschen und/oder elektromagnetischer Strahlung - so genannten EMV-Störungen). Bei einem diskontinuierlichen oder lückenden Betriebsmodus (DCM) eines Schaltwandlers wird z.B. das zumindest eine Schaltelement des Schaltwandlers eingeschaltet, nachdem die Induktivität bzw. Spule des Schaltwandlers entmagnetisiert wurde, wodurch eine Totzeit auftritt. Während dieser Totzeit schwingen bei hart schaltenden Wandlern die parasitären Kapazitäten mit der Induktivität des Wandlers um die Eingangs- bzw. Zwischenkreisspannung und können vor dem nächsten Einschaltzeitpunkt auf entsprechend hohe Spannungen aufgeladen werden. Beim Einschalten eines Schaltelements des Wandlers im nächsten Taktzyklus werden diese parasitären Kapazitäten z.B. über das Schaltelement (z.B. Transistor, etc.) entladen bzw. umgeladen und erzeugen dabei je nach anliegender Spannung mehr oder weniger hohe Stromspitzen, welche bei entsprechend hoher Spannung zu entsprechend hohen Schaltverlusten führen. Darüber hinaus sind derartige Stromspitzen reich an Oberwellen, was zusätzlich eine Störabstrahlung bzw. die EMI erhöht.

Um diese Schaltverluste sowie die Störabstrahlung zu minimieren, kann der Schaltwandler in einem so genannten quasiresonanten Modus betrieben werden bzw. für das zumindest eine Schaltelement des Wandlers so genanntes quasiresonantes Schalten angestrebt werden. Beim quasiresonanten Schalten wird beispielsweise mittels eines Erkennungskreises oder einer Erkennungsschaltung ein Minimum (auch "Valley" genannt) der Drain-Source-Spannung des zumindest einen Schaltelements des Wandlers effektiv erfasst und das Schaltelement erst zu diesem Zeitpunkt eingeschaltet. Da die parasitäre Kapazität auf die Mindestspannung geladen ist, wird auf diese Weise die Einschaltstromspitze minimiert und eine Reduktion der Schaltverluste und der Störabstrahlung erreicht. Diese Art des Schaltens des Schaltelements bzw. des Schaltwandlers wird allgemein als Valley-Switching, Nulldurchgangsschalten oder quasiresonantes Schalten bezeichnet. Jedes Minimum der am abgeschalteten Schaltelement des Wandlers anliegenden, schwingenden Spannung wird als Valley bezeichnet. Dabei wird ein während einer Schaltperiode zeitlich zuerst auftretendes Valley als erstes Valley bezeichnet. Die nachfolgenden Valleys werden entsprechend ihrer zeitlichen Abfolge als zweites, drittes, viertes, usw. Valley bezeichnet.

Ein Einschaltzeitpunkt wird dem zumindest einen Schaltelement des Wandlers üblicherweise durch ein Schaltsignal einer Schaltreglereinheit vorgegeben. Üblicherweise wird zum Generieren des Schaltsignal ein Pulsweitenmodulations- oder PWM-Schaltregler verwendet. Dabei wird ein Einschaltimpuls für das Schaltelement im Schaltsignal (z.B. ansteigende Flanke eines Rechtecksignals) durch Erreichen eines Einschaltschwellwertes durch ein Sägezahnsignal erzeugt. Um das zumindest eine Schaltelement des Wandlers in einem Valley einzuschalten, kann beispielsweise, wie in der Schrift EP 2 173 026 B1 beschrieben, das Sägezahnsignal mit einem Valley-Erkennungssignal beaufschlagt werden. Dadurch wird erreicht, dass der Einschaltzeitpunkt des Schaltelements in ein Valley der am abgeschalteten Schaltelement anliegenden, schwingenden Spannung fällt.

Das Einschalten während eines Valleys bewirkt ein laufendes Zurücksetzen des Periodenbeginns (Impuls-Reset) und somit ein Anpassen der Schaltfrequenz unabhängig von der Last oder einer Zwischenkreisspannung zu diesem Zeitpunkt. Wird das Schaltelement z.B. immer beim gleichen (z.B. ersten) Valley eingeschaltet, so steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden. Um zu hohe Schaltfrequenzen bei geringer Last bzw. im Leerlauf zu vermeiden, wird z.B. bei Erreichen der durch die Dimensionierung des Schaltwandlers vorgegebenen, maximalen Schaltfrequenz in der Regel der Einschaltzeitpunkt des zumindest einen Schaltelements des Schaltwandlers auf ein späteres Valley verlegt. D.h., dass bei sinkender Last bzw. sinkender Ausgangsleistung des Wandlers beispielsweise der Einschaltzeitpunkt des Schaltelements von einem aktuellen Valley auf ein späteres Valley - z.B. vom dritten Valley auf das vierten Valley - verlegt wird.

Analog beginnt bei steigender Last bzw. steigendem Leistungsbedarf am Ausgang des Wandlers die Schaltfrequenz zu sinken, bis einen durch die Dimensionierung des Schaltwandlers vorgegebene minimale Schaltfrequenz erreicht wird. Um ein Sinken der Schaltfrequenz unter den vorgegebenen Minimalwert zu verhindern, wird der Einschaltzeitpunkt des zumindest einen Schaltelements auf einen früheres Valley verlegt. D.h., dass bei steigender Last bzw. steigender Ausgangsleistung des Wandlers beispielsweise das Schaltelement anstatt in einem aktuellen Valley in einem früheren Valley - z.B. im dritten Valley anstatt im vierten Valley - eingeschaltet wird.

Durch ein Umschalten zwischen den Valleys nach Veränderungen der Last (z.B. vom Leerlauf bis zur Volllast) kann beispielsweise erreicht werden, dass der Schaltwandler bzw. das zumindest eine Schaltelement des Schaltwandlers in einem eingeregelten Zustand mit einer annähernd gleichen, stabilen Schaltfrequenz geschaltet werden kann. D.h., mit dieser stabilen Schaltfrequenz arbeitet der Schaltwandler in einem stabilen Arbeitspunkt. Die stabile Schaltfrequenz ist üblicherweise durch die Induktivitäten und Kapazitäten sowie einen Wirkungsgrad des Schaltwandlers vorgegeben und kann z.B. aus dem maximalen und minimalen Wert der Schaltfrequenz (z.B. arithmetisches Mittel) bestimmt werden.

Eine Veränderung der Last bzw. des Leistungsbedarfs am Ausgang des Schaltwandlers und eine dadurch notwendige Umschaltung zwischen den Valleys kann allerdings einen instabilen Zustand der Regelung hervorrufen. Eine Lastveränderung am Ausgang des Schaltwandlers führt z.B. zu einer Veränderung der Ausgangsspannung des Schaltwandlers, welche eine Veränderung einer Stellgröße für eine Regelung der Ausgangsspannung sowie eine Veränderung des Ausschaltzeitpunkts des Schaltelements des Schaltwandlers zur Folge hat. Durch die Veränderung des Ausschaltzeitpunkts des Schaltelements wird z.B. bei steigender Last das Valley-Erkennungssignal zu einem späteren Zeitpunkt dem Sägezahnsignal der Schaltreglereinheit beaufschlagt. Bei einer sinkenden Last würde sich der Zeitpunkt, zu dem das Valley-Erkennungssignal dem Sägezahnsignal beaufschlagt werden, beispielsweise zeitlich vorverschieben.

Da der Einschaltzeitpunkt des Schaltelements durch ein Erreichen bzw. Überschreiten des Einschaltschwellwertes durch das mit dem Valley-Erkennungssignal beaufschlagte Sägezahnsignal bestimmt wird, kann eine Laständerung dazu führen, dass z.B. zwei Valley-Erkennungssignale den Einschaltschwellwert erreichen bzw. überschreiten. Das bedeutet, dass von der Schaltreglereinheit der Einschaltzeitpunkt des Schaltelements je nach Laständerung von einem aktuellen Valley auf ein früheres oder späteres Valley umgeschaltet wird. Dadurch kommt es zu einer Veränderung der Schaltfrequenz und somit zu einer sprunghaften Veränderung der vom Schaltwandler übertragenen Leistung. Um die Leistungsveränderung auszugleichen, wird die Ausgangsspannung von der Spannungsregelung des Schaltwandlers zurückgeregelt und gegebenenfalls auf das davor aktuelle Valley zurückgeschaltet. In diesem Fall kann das Einschaltverhalten des Schaltelements zur einem labilen Zustand für die Regelung der Ausgangsspannung des Schaltwandlers führen, wodurch die pulsmodulierte Schaltreglereinheit gezwungen wird, laufend zwischen zwei aufeinanderfolgenden Valleys - z.B. zwischen dem dritten und vierten Valley - unkontrollierten hin- und herzuspringen. Dieser Effekt wird als "Valley-Skipping" oder auch "Valley-Hopping" bezeichnet. Durch das Valley-Skipping kommt es im Regelkreis zu einer Grenzzyklusschwingung mit einer Schwingfrequenz im hörbaren Bereich (z.B. 5 bis 15 kHz) sowie einer höheren Verlustleistung.

Relevanter Stand der Technik für die vorliegende Erfindung ist ausserdem:
- US 2011/182088 A1
- Siemens: "Quasi-Resonant PWM Controller ICE2QS03 Datasheet", 4. Juli 2011 (2011-07-04), Seiten 1-19
- US 9 083 250 B2
- US 2019/252966
- CN 111 490 681 A
- CN 109 067 213 A.

Diese Druckschriften offenbaren Verfahren zur Regelung eines quasiresonant betriebenen Schaltwandlers und Verfahren um bei konstanter Last kein Hin und Herschwingen zwischen benachbarten Valleys zu erhalten (also ein Valley Hopping zu vermeiden), welches sich in Schwingfrequenzen im hörbaren Bereich ausdrückt.

### Darstellung der Erfindung

Der Erfindung liegt die Aufgabe zugrunde, für einen quasiresonant schaltenden Schaltwandler eine Verbesserung gegenüber dem Stand der Technik derart anzugeben, dass ein unkontrolliertes Valley-Skipping vermieden wird.

Erfindungsgemäß wird diese Aufgabe gelöst durch ein Verfahren gemäß Anspruch 1 sowie ein System gemäß Anspruch 7. In abhängigen Ansprüchen sind vorteilhafte Weiterbildungen der Erfindung angegeben.

Die Erfindung beruht darauf, dass ein Schaltwandler mit zumindest einem Schaltelement in einem quasiresonanten Betrieb oder Modus betrieben wird. Das zumindest eine Schaltelement wird dabei in einem eingeregelten Zustand des Schaltwandlers mit einer vorgegebenen, stabilen Schaltfrequenz geschaltet. Weiterhin werden dem zumindest einen Schaltelement Einschaltzeitpunkte durch ein Schaltsignal vorgegeben, welches durch Erreichen eines Einschaltschwellwerts durch ein mit einem Valley-Erkennungssignal beaufschlagtes Sägezahnsignal erzeugt wird, wobei durch das Valley-Erkennungssignal ein jeweiliger Einschaltzeitpunkt des zumindest einen Schaltelements in ein Valley einer am abgeschalteten Schaltelement anliegenden, schwingenden Spannung fällt. Weiterhin wird z.B. laufend eine aktuelle Periodendauer des Schaltsignals ermittelt und die ermittelte, aktuelle Periodendauer des Schaltsignals mit einer vorgegebenen Referenzperiodendauer verglichen. Aus einem Vergleich der ermittelten, aktuellen Periodendauer mit der Referenzperiodendauer wird eine Steuergröße abgeleitet, von welcher bei Veränderung einer Last am Ausgang des Schaltwandlers ein Abstand zwischen dem mit dem Valley-Erkennungssignal beaufschlagtem Sägezahnsignal und dem Einschaltschwellwert solange verändert wird, bis anhand der ermittelten, aktuellen Periodendauer ein Erreichen der vorgegebene, stabilen Schaltfrequenz festgestellt wird.

Der Hauptaspekt der erfindungsgemäß vorgeschlagenen Lösung besteht vor allem darin, dass bei Veränderung einer Last am Ausgang des Schaltwandlers ein sprunghaftes Umschalten zwischen einem aktuellen Valley zum Ableiten des Einschaltzeitpunkts des Schaltelements auf ein früheres oder späteres Valley (entsprechend der jeweiligen Lastveränderung) ermöglicht wird. Dabei beeinflusst bei einer Lastveränderung am Ausgang des Schaltwandlers die Steuergröße, welcher aus einer jeweils aktuellen Periodendauer abgeleitet wird, den Abstand zwischen dem Einschaltschwellwert und dem mit dem Valley-Erkennungssignal beaufschlagten Sägezahnsignal der PWM-Steuerung derart, dass ein Einschaltpunkt solange durch ein aktuelles Valley bestimmt wird, bis je nach Veränderung der Last sicher auf ein vorhergehendes oder nachfolgendes Valley zum Bestimmen des Einschaltzeitpunkts umgeschaltet werdenohne das auf das aktuelle Valley zurückgesprungen wird. D.h., die Veränderung des Abstands zwischen dem Einschaltschwellwert und dem mit dem Valley-Erkennungssignal beaufschlagten Sägezahnsignal der Schaltreglereinheit erzeugt eine Hysterese, wodurch ein unkontrolliertes Valley-Skipping bzw. Valley-Hopping verhindert wird.

Es ist dabei vorteilhaft, wenn eine Veränderung des Abstands zwischen dem mit dem Valley-Erkennungssignal beaufschlagtem Sägezahnsignal und dem Einschaltschwellwert durch die Steuergröße proportional zur Veränderung der Last am Ausgang des Schaltwandlers durchgeführt wird. Das bedeutet, dass z.B. bei steigender Last ein Abstand zwischen Einschaltschwellwert und dem mit dem Valley-Erkennungssignal beaufschlagtem Sägezahnsignal vergrößert wird, bzw. bei sinkender Last dieser Abstand verringert wird.

Ein bevorzugte Ausführungsform der Erfindung sieht beispielsweise vor, dass eine Veränderung des Abstands zwischen dem mit dem Valley-Erkennungssignal beaufschlagtem Sägezahnsignal und dem Einschaltschwellwert durch Veränderung einer Steigung bzw. einer Neigung einer Rampe des Sägezahnsignals in Abhängigkeit von der Steuergröße durchgeführt wird.

Alternativ dazu kann beispielsweise eine Veränderung des Abstands zwischen dem mit dem Valley-Erkennungssignal beaufschlagtem Sägezahnsignal und dem Einschaltschwellwert durch Veränderung des Einschaltschwellwertes in Abhängigkeit von der Steuergröße durchgeführt werden. Dabei wird z.B. die Einschaltschwelle in Abhängigkeit von der jeweiligen Lastveränderung gesenkt oder erhöht.

Weiterhin ist es günstig, wenn die Steuergröße bei Erreichen der vorgegebenen, stabilen Schaltfrequenz auf einen vorgegebenen Ausgangswert zurückgesetzt wird. Das Zurücksetzen der Steuergröße erfolgt z.B. sprunghaft, wenn die vorgegebene, stabile Schaltfrequenz bzw. die entsprechende, zugehörige Periodendauer des Schaltsignals festgestellt wird. Wird von der Steuergröße wieder der Ausgangswert angenommen, so wird der Abstand dem mit dem Valley-Erkennungssignal beaufschlagtem Sägezahnsignal der Schaltreglereinheit und dem Einschaltschwellwert nicht mehr beeinflusst bzw. verändert. Der Ausgangswert der Steuergröße ergibt sich beispielsweise aus der vorgegebenen, stabilen Schaltfrequenz des Schaltwandlers bzw. der zugehörigen Periodendauer.

Je nach Realisierung der Detektion der aktuellen Periodendauer kann die aktuelle Periodendauer des Schaltsignals idealerweise in Form eines Digitalwerts oder eines Analogwerts ermittelt werden. Zum Ermitteln der Periodendauer als Digitalwert kann beispielsweise ein Mikrokontroller eingesetzt werden, von welchem die aktuelle Periodendauer des Schaltsignals gemessen wird. Alternativ kann die Periodendauer des Schaltsignals mittels einer Analogschaltung bestimmt werden, durch welche die aktuelle Periodendauer des Schaltsignals als Analogspannungsmittelwert einer zum Sägezahnsignal der Schaltreglereinheit synchronen, sägezahnförmigen Hilfsspannung ausgegeben wird. Zur Bestimmung der aktuellen Periodendauer des Schaltsignal kann allerdings auch ein Frequenz-Spannungswandler eingesetzt werden, durch welchen die aktuelle Frequenz des üblicherweise rechteckförmigen Schaltsignals in eine frequenzabhängige bzw. dazu proportionale Gleichspannung umgewandelt wird.

Weiterhin erfolgt die Lösung der genannte Aufgabe durch ein System zur Regelung eine Schaltwandlers mit zumindest einem Schaltelement im quasiresonanten Betrieb, wobei das System zur Durchführung des erfindungsgemäßen Verfahrens eingerichtet ist und dazu zumindest umfasst:
- eine Schaltreglereinheit zum Erzeugen eines Schaltsignals, welches dem zumindest einen Schaltelement des Schaltreglers Einschaltzeitpunkte vorgegeben werden, wobei die Schaltreglereinheit eine Oszillatoreinheit zum Generieren eines Sägezahnsignals aufweist, welches zum Generieren des Schaltsignals mit einem Einschaltschwellwert verglichen wird;
- ein Valley-Erkennungseinheit zum Generieren eines Valley-Erkennungssignals, welches dem Sägezahnsignal beaufschlagt wird, wodurch ein jeweiliger Einschaltzeitpunkt des zumindest einen Schaltelements in ein Valley einer am abgeschalteten Schaltelement anliegenden, schwingenden Spannung fällt;
- eine Einheit zur Periodendauerdetektion, welche ein aktuelle Periodendauer des Schaltsignals ermittelt;
- eine Periodendauerreferenzeinheit zum Vorgeben einer Referenzperiodendauer (Tref); und
- eine Reglereinheit, welche aus der aktuellen, von der Einheit zur Periodendauerdetektion ermittelten Periodendauer und der Referenzperiodendauer der Periodendauerreferenzeinheit ein Steuergröße zum Verändern eines Abstands zwischen dem mit dem Valley-Erkennungssignal beaufschlagtem Sägezahnsignal und dem Einschaltschwellwert erzeugt.

Bei dem erfindungsgemäßen System wird einer Regelung eines Schaltwandlers durch einen Schaltregler ein weiterer Regelkreis überlagert. Durch diesen weiteren Regelkreis wird bei einer Lastveränderung am Ausgang des Schaltreglers zusätzlich zur Regelung der Ausgangsspannung auf einen vorgegebenen, konstanten Ausgangsspannungswert ein Abstand zwischen dem mit dem Valley-Erkennungssignal beaufschlagtem Sägezahnsignal der Schaltreglereinheit und dem Einschaltschwellwert zum Festlegen der Einschaltzeitpunkte des Schaltelements des Schaltwandlers verändert bzw. derart beeinflusst, dass ein unkontrolliertes Hin- und Herspringen zwischen Valleys bzw. ein unkontrolliertes Valley-Skipping idealerweise verhindert bzw. unterbunden wird.

Für eine Realisierung des erfindungsgemäßen System kann die Einheit zur Periodendetektion z.B. mit Hilfe eines Mikrokontrollers, welcher die jeweils aktuelle Periodendauer des Schaltsignals ermittelt, oder eines Frequenz-Spannungswandlers realisiert sein. Eine kostengünstigere Realisierungsvariante der Einheit zur Periodendetektion stellt beispielsweise eine Analogschaltung dar, welche die aktuelle Periodendauer des Schaltsignals als Analogspannungsmittelwert einer zum Sägezahnsignal der Schaltreglereinheit synchronen, sägezahnförmigen Hilfsspannung bestimmt.

Idealerweise ist die Reglereinheit, von welcher die Steuergröße zum Verändern eines Abstands zwischen dem mit dem Valley-Erkennungssignal beaufschlagtem Sägezahnsignal und dem Einschaltschwellwert erzeugt wird, als Proportional-Integral-Regler ausgeführt.

### Kurzbeschreibung der Zeichnung

Die Erfindung wird nachfolgend in beispielhafter Weise anhand der beigefügten Figuren erläutert. Es zeigen:
Figur 1 einen schematischen und beispielhaften Aufbau des erfindungsgemäßen System zur Regelung eines quasiresonant schaltenden Schaltwandlers
Figur 2 beispielshaft und schematisch einen Ablauf des erfindungsgemäßen Verfahrens zur Regelung eines Schaltwandlers
Figur 3 beispielhaft und schematisch eine analoge Realisierungsvariante des erfindungsgemäßen Systems zur Regelung eines quasiresonanten Schaltwandlers

### Ausführung der Erfindung

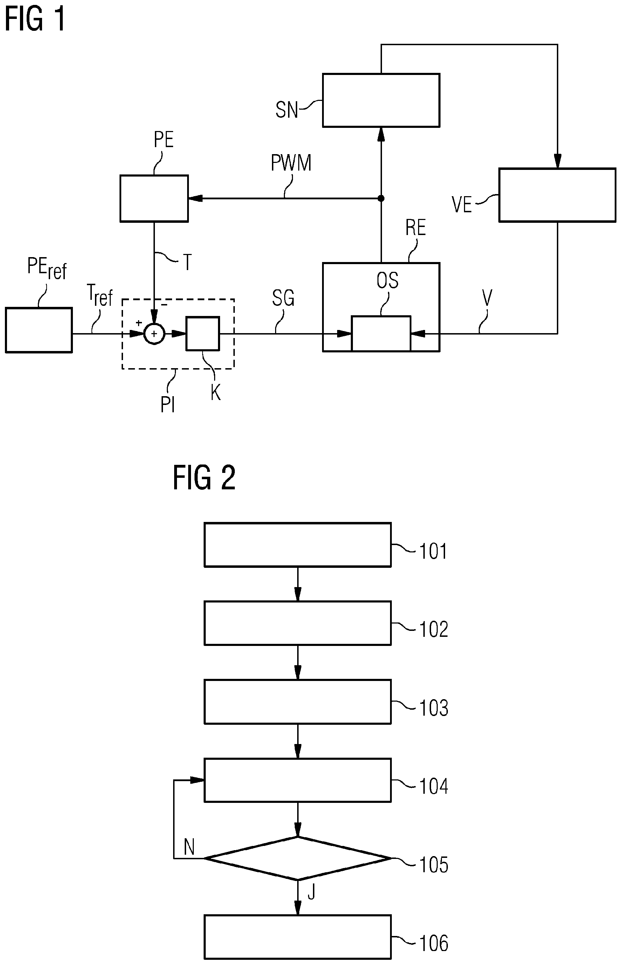

Figur 1 zeigt beispielhaft und in schematischer Weise das erfindungsgemäße System zur Regelung eines quasiresonant schaltenden Schaltwandler SN. Das System umfasst einen Schaltwandler SN mit zumindest einem Schaltelement, welche mittels eines rechteckförmigen Schaltsignal PWM angesteuert wird. Dabei werden die Einschaltzeitpunkte für das Schaltelement beispielsweise mittels steigender Flanken des rechteckförmigen Schaltsignals PWM vorgegeben. In einem eingeregelten Zustand des Schaltwandlers SN wird das Schaltelement üblicherweise mit einer vorgegebenen, stabilen Schaltfrequenz geschaltet. Diese stabile Schaltfrequenz bzw. eine zugehörige Periodendauer wird durch die Dimensionierung des Schaltwandlers SN - insbesondere die Induktivitäten und Kapazitäten sowie einen zu erreichenden Wirkungsgrad - vorgegeben.

Zum Generieren des Schaltsignal PWM weist das erfindungsgemä-ße System eine Schaltreglereinheit RE auf, welche z.B. als pulsweitenmodulierter Schaltregler RE ausgestaltet ist. Die Schaltreglereinheit RE umfasst eine Oszillatoreinheit OS (z.B. Sägezahngenerator), von welcher ein Sägezahnsignals erzeugt wird. Das Sägezahnsignal dient zum Erzeugen des Schaltsignals PWM.

Weiterhin ist ein Valley-Erkennungseinheit VE (z.B. Nulldurchgangsdetektor) vorgesehen, von welcher ein Valley-Erkennungssignal V erzeugt wird. Zum Generieren des Valley-Erkennungssignals V wird von der Valley-Erkennungseinheit VE beispielsweise eine am ausgeschalteten Schaltelement des Schaltwandlers SN anliegende, schwingende Spannung gemessen. Wird durch die Spannungsmessung im Spannungsverlauf am ausgeschalteten Schaltelement ein Spannungsminimum bzw. ein so genanntes Valley festgestellt, so kann von der Valley-Erkennungseinheit VE beispielsweise ein Impuls als Valley-Erkennungssignal V erzeugt werden. Das Valley-Erkennungssignal V wird dann der Schaltreglereinheit RE zugeführt und dort dem von der Oszillatoreinheit OS generierten Sägezahnsignal beaufschlagt.

Zum Ermitteln der Einschaltzeitpunkte des Schaltelements des Schaltwandlers SN wird in der Schaltreglereinheit RE das mit dem Valley-Erkennungssignal V beaufschlagte Sägezahnsignal mit einem vorgegebenen Einschaltschwellwert verglichen. Erreicht oder überschreitet das mit dem Valley-Erkennungssignal V beaufschlagte Sägezahnsignal den vorgegebenen Einschaltschwellwert, so wird im Schaltsignal PWM beispielsweise ein steigende Flanke generiert und damit ein Einschaltzeitpunkt für das zumindest eine Schaltelement des Schaltwandlers SN festgelegt. Durch die Beaufschlagung des Sägezahnsignals mit dem Valley-Erkennungssignal V wird erreicht, dass der Einschaltzeitpunkt des zumindest einen Schaltelements des Schaltwandlers SN in ein Minimum bzw. Valley der am abgeschalteten Schaltelement anliegenden, schwingenden Spannung fällt.

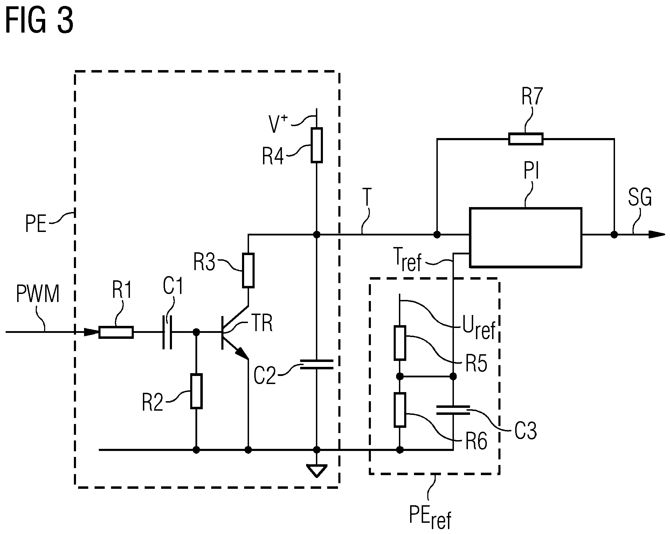

Weiterhin umfasst das System eine Einheit zur Periodendauerdetektion PE, von welcher eine aktuelle Periodendauer T des Schaltsignals PWM als Analog- oder Digitalwert ermittelt wird. Eine mögliche Realisierungsvariante der Einheit zur Periodendauerdetektion PE, durch welche eine aktuelle Periodendauer T des Schaltsignals PWM beispielsweise als Analogwert ermittelt wird, ist beispielshaft in Figur 3 dargestellt. Dabei wird beispielsweise die Periodendauer T als Analogspannungsmittelwert eines jeweiligen Sägezahns einer zum Sägezahnsignal der Schaltreglereinheit RE synchronen, aber getrennten sägezahnförmigen Hilfsspannung bestimmt.

Alternativ kann die Einheit zur Periodendauerdetektion PE z.B. mittels eines Mikrokontrollers realisiert werden, von welchen die aktuelle Periodendauer T des Schaltsignals PWM gemessen wird. Weiterhin kann die Einheit zur Periodendauerdetektion PE beispielsweise auch mit Hilfe eines Frequenz-Spannungswandlers realisiert werden, durch welchen z.B. die aktuelle Frequenz des üblicherweise rechteckförmigen Schaltsignals PWM in eine frequenzabhängige bzw. dazu proportionale Gleichspannung umwandelt.

Weiterhin ist einen Periodendauerreferenzeinheit PEref vorgesehen, von welcher eine vorgegebene Referenzperiodendauer Tref zur Verfügung gestellt wird. Eine mögliche Realisierungsvariante der Periodendauerreferenzeinheit PEref wird noch anhand der Figur 3 näher erläutert. Die Referenzperiodendauer Tref oder ein der Referenzperiodendauer Tref entsprechender Spannungswert Uref kann beispielsweise durch eine Kalibrierung des Regelsystems beispielsweise auf Basis einer Dimensionierung von Schaltwandler SN (z.B. Maximal- und Minimalwert der Schaltfrequenz, Induktivitäten, etc.) und Schaltreglereinheit RE z.B. bei einer erstmaligen Inbetriebnahme eingestellt werden.

Weiterhin umfasst das System eine Reglereinheit PI, welche z.B. als Proportional-Integral- oder PI-Regler ausgeführt sein kann. Der Reglereinheit PI werden die von der Periodendauerreferenzeinheit PEref zur Verfügung gestellte, vorgegebene Referenzperiodendauer Tref als Sollwert sowie die aktuelle Periodendauer T des Schaltsignals PWM, welche von der Einheit zur Periodendauerdetektion PE ermittelt wurde, als Istwert zugeführt. Von der Reglereinheit PI wird die aktuell ermittelte Periodendauer T mit der Referenzperiodendauer Tref verglichen bzw. eine Differenz aus der Referenzperiodendauer Tref und der aktuellen Periodendauer T gebildet. Aus einem Vergleichsergebnis wird dann von der Reglereinheit PI eine Steuergröße SG abgeleitet, welche z.B. mit einem Verstärkungsfaktor K verstärkt werden kann. Der Verstärkungsfaktor K wird dabei z.B. durch die Realisierung bzw. Dimensionierung des PI-Reglers vorgegeben. Die Steuergröße SG wird dann an die Schaltreglereinheit RE weitergeleitet und kann dort bei einer Lastveränderung am Ausgang des Schaltwandlers SN ein Abstand zwischen dem Eingangsschwellwert und dem mit dem Valley-Erkennungssignal V beaufschlagtem Sägezahnsignal der Oszillatoreinheit OS solange verändern, bis anhand der von der Einheit zur Periodendauerdetektion PE ermittelten, aktuellen Periodendauer T bzw. durch den Vergleich der ermittelten, aktuellen Periodendauer T mit der Referenzperiodendauer Tref ein Erreichen der vorgegebenen, stabilen Schaltfrequenz des Schaltwandlers SN festgestellt worden ist.

Figur 2 zeigt einen beispielhaften Ablauf des erfindungsgemäßen Verfahrens zur Regelung eines quasiresonant schaltenden Schaltwandlers SN. Dazu wird in einem Ermittlungsschritt 101 von der Einheit zur Periodendauerdetektion PE eine aktuelle Periodendauer T des Schaltsignals PWM der Schaltreglereinheit RE ermittelt. Die aktuelle Periodendauer T kann dabei je nach Realisierung der Einheit zur Periodendauerdetektion PE - z.B. mittels Mikrokontrollers, mit Hilfe eines Frequenz-Spannungswandlers oder als Analogschaltung - in Form eines Digitalwerts oder eines Analogwerts bestimmt werden.

Für einen Vergleichsschritt 102 wird die ermittelte, aktuelle Periodendauer T einer Reglereinheit PI als Istwert zugeführt. Im Vergleichsschritt 102 wird die ermittelte, aktuelle Periodendauer T mit einer vorgegebenen Referenzperiodendauer Tref, verglichen. Die vorgegebene Referenzperiodendauer Tref wird z.B. von einer Periodendauerreferenzeinheit PEref als Sollwert vorgegeben. Der Vergleich zwischen der ermittelten, aktuellen Periodendauer T und der vorgegebenen Referenzperiodendauer Tref kann von der Reglereinheit PI beispielsweise mittels Subtraktion des Istwerts bzw. der Periodendauer T vom Sollwert bzw. von der Referenzperiodendauer Tref durchgeführt werden.

In einem Ableitschritt 103 wird aus einem Vergleichsergebnis zwischen der ermittelten, aktuellen Periodendauer T und der vorgegebenen Referenzperiodendauer Tref eine Steuergröße SG abgeleitet. Die Steuergröße SG kann von der Reglereinheit PI gegebenfalls mit einem Verstärkungsfaktor K, welche durch eine Dimensionierung bzw. Realisierung der Reglereinheit PI vorgegeben ist, verstärkt werden. Die Steuergröße SG wird dann an die Schaltreglereinheit RE weitergeleitet.

Kommt es zu einer Veränderung der Last am Ausgang des Schaltwandlers SN bzw. verändert sich am Ausgang ein Leistungsbedarf und damit die Ausgangsspannung des Schaltwandlers SN, so wird in einem Regelungsschritt 104 von der Steuergröße SG ein Abstand zwischen dem mit dem Valley-Erkennungssignal V beaufschlagtem Sägezahnsignal der Oszillatoreinheit OS der Schaltreglereinheit RE und dem Einschaltschwellwert verändert. Dabei kann die Steuergröße SG den Abstand zwischen dem mit dem Valley-Erkennungssignal V beaufschlagtem Sägezahnsignal und dem Einschaltschwellwert beispielsweise proportional zur Veränderung der Last am Ausgang des Schaltwandlers SN vornehmen. D.h., dass beispielweise bei einer steigenden Last dieser Abstand durch die Steuergröße SG vergrößert wird und beispielsweise bei sinkender Last dieser Abstand durch die Steuergröße verringert wird.

Die Änderung des Abstands zwischen dem mit dem Valley-Erkennungssignal V beaufschlagtem Sägezahnsignal und dem Einschaltschwellwert im Regelungsschritt 104 kann beispielsweise dadurch erreicht werden, dass mit Hilfe der Steuergröße eine Neigung eines Sägezahns bzw. einer Rampe des Sägezahnsignals in Abhängigkeit zur Lastveränderung bzw. zur Veränderung der aktuellen Periodendauer T des Schaltsignals PWM, welche durch die Lastveränderung ausgelöst wird, beeinflusst wird. Alternativ kann durch die Steuergröße bei einer Lastveränderung am Ausgang des Schaltwandlers SN eine Höhe des Einschaltschwellwertes im Regelungsschritt 104 in Abhängigkeit von einer jeweiligen Lastveränderung bzw. Veränderung der aktuellen Periodendauer T verändert werden.

Eine Veränderung des Abstands zwischen dem mit dem Valley-Erkennungssignal V beaufschlagtem Sägezahnsignal und dem Einschaltschwellwert durch die Steuergröße SG wird solange im Regelungsschritt 104 vorgenommen, bis in einem Prüfschritt 105 anhand der ermittelten, aktuellen Periodendauer T festgestellt wird, dass die vorgegebene, stabile Schaltfrequenz des Schaltwandlers SN erreicht worden ist.

Das bedeutet, dass beispielsweise bei steigender Last am Ausgangs des Schaltwandlers SN durch die entsprechende Regelung der Ausgangsspannung des Schaltwandlers SN vorerst die aktuelle Periodendauer T des Schaltsignals PWM steigt. Im Ableitschritt 103 wird von der Reglereinheit PI beispielsweise eine Steuergröße SG generiert, welche proportional zur steigenden Periodendauer T abnimmt. Die Steuergröße SG kann dann beispielsweise den Abstand zwischen dem mit dem Valley-Erkennungssignal V beaufschlagtem Sägezahnsignal und dem Einschaltschwellwert dadurch beeinflussen, dass die Neigung bzw. die Steigung der Sägezahnrampe des Sägezahnsignals der Oszillatoreinheit OS ebenfalls proportional zur steigenden Periodendauer T abnehmen. D.h., die Sägezahnrampe wird flacher und der Einschaltzeitpunkt des Schaltelements des Schaltwandlers SN weiterhin durch ein aktuelles Valley der am abgeschalteten Schaltelement schwingenden Spannung bestimmt. Wird durch das veränderte, mit dem Valley-Erkennungssignal V beaufschlagte Sägezahnsignal der Einschaltschwellwert zu einem Zeitpunkt eines vorhergehenden Valley erreicht oder überschritten, so wird im Prüfschritt 105 anhand der ermittelten, aktuellen Periodendauer T erkannt, dass die Schaltfrequenz sprunghaft auf den Wert der vorgegebenen, stabilen Schaltfrequenz zurückgekehrt ist, welcher welchem ein stabiles Einschalten ermöglicht bzw. bei welcher ein stabiler Arbeitspunkt des Schaltwandlers SN erreicht ist.

Bei sinkender Last am Ausgang des Schaltwandlers SN wird beispielsweise durch die entsprechende Regelung der Ausgangsspannung des Schaltwandlers die aktuelle Periodendauer T des Schaltsignals PWM kleiner. Durch das Absinken der aktuellen Periodendauer T nimmt die im Ableitschritt 103 aus der ermittelten, aktuellen Periodendauer T abgeleitete Steuergröße SG zu. Die Steuergröße SG kann dann beispielsweise den Abstand zwischen dem mit dem Valley-Erkennungssignal V beaufschlagtem Sägezahnsignal und dem Einschaltschwellwert dadurch beeinflussen, dass die Neigung bzw. die Steigung der Sägezahnrampe des Sägezahnsignals der Oszillatoreinheit OS ebenfalls proportional zur sinkenden Periodendauer T zunehmen. D.h., die Sägezahnrampe wird steiler und der Einschaltzeitpunkt des Schaltelements des Schaltwandlers SN weiterhin durch ein aktuelles Valley der am abgeschalteten Schaltelement schwingenden Spannung bestimmt. Wird durch das veränderte, mit dem Valley-Erkennungssignal V beaufschlagte Sägezahnsignal der Einschaltschwellwert zu einem Zeitpunkt eines nachfolgenden Valley erreicht oder überschritten, so wird im Prüfschritt 105 anhand der ermittelten, aktuellen Periodendauer T erkannt, dass die Schaltfrequenz sprunghaft auf den Wert der vorgegebenen, stabilen Schaltfrequenz zurückgekehrt ist, welcher welchem ein stabiles Einschalten ermöglicht bzw. bei welcher ein stabiler Arbeitspunkt des Schaltwandlers SN erreicht ist.

Wurde im Prüfschritt 105 erkannt, dass die aktuelle Schaltfrequenz den Wert der vorgegebenen, stabilen Schaltfrequenz erreicht hat, so wird von der Steuergröße SG in einem Rücckehrschritt 106 wieder ein vorgegebenen angenommen. Dieser Ausgangswert kann z.B. durch die vorgegebene, stabile Schaltfrequenz bzw. die zugehörige Periodendauer T sowie die vorgegebene Referenzperiodendauer Tref festgelegt werden.

In Figur 3 ist beispielhaft und schematisch eine Realisierungsvariante des System zur Regelung eines Schaltwandler SN, insbesondere eine analoge Realisierungsvariante der Einheit zur Periodendauerdetektion PE, der Periodendauerreferenzeinheit PEref sowie die Reglereinheit PI dargestellt.

Dabei umfasst die beispielhafte Realisierung der Einheit zur Periodendauerdetektion PE eine Serienschaltung aus einem ersten Widerstand R1 und einem ersten Kondensator C1, welche mit einer Basis eines Transistors TR (z.B. Bipolartransistor) verbunden ist. Weiterhin ist die Basis des Transistors TR über einen zweiten Widerstand R2 mit einem Bezugspotential verbunden. Ein Emitter des Transistors TR ist ebenfalls mit dem Bezugspotential verbunden und an einen Kollektor des Transistors TR ein dritter Widerstand R3 angeschaltet. Zum Transistor TR und dem dritten Widerstand R3 ist ein zweiter Kondensator C2 parallel angeordnet, welcher einerseits in einem Verbindungspunkt zum dritten Widerstand R3 eine Verbindung aufweist. Über einen vierten Widerstand R4 ist der zweite Kondensator C2 mit einer Spannung V+ verbunden, wobei der zweite Kondensator C2 mit dem vierten Widerstand eine Integratorschaltung bildet. Weiterhin ist der zweite Kondensator ebenfalls mit dem Bezugspotential verbunden.

Für ein Ermitteln der aktuellen Periodendauer wird der zweite Kondensator C2 über die Serienschaltung aus erstem Widerstand R1 und erstem Kondensator C1 und den Transistor TR bei einer steigenden Flanke des Schaltsignals PWM entladen. Dabei entspricht die steigende Flanke des Schaltsignals PWM einem Einschaltzeitpunkt des Schaltelements des Schaltwandlers SN in einem aktuellen Valley. Über den vierten Widerstand R4, welcher wie eine Stromquelle wirkt, kann der zweite Kondensator C2 wieder aufgeladen werden, bis der zweite Kondensator C2 bei einer nächsten positiven Flanke des Schaltsignals PWM - d.h. dem nächsten Einschaltzeitpunkt des Schaltelements des Schaltwandlers SN - wieder entladen wird. Das führt zu einer Integration der aktuellen Periodendauer T des Schaltsignals PWM im Verbindungspunkt zwischen drittem Widerstand R3, viertem Widerstand R4 und zweitem Kondensator C2. Durch die Verbindung der Serienschaltung aus erstem Widerstand R1 und erstem Kondensator C1, dem Transistor TR und der Integratorschaltung bestehend aus dem zweiten Kondensator C2 und dem vierten Widerstand R4 wird die aktuelle Periodendauer T des Schaltsignals PWM in einen von der aktuellen Periodendauer T abhängige, analoge Spannungsmittelwert eines aus dem Schaltsignal PWM abgeleiteten Sägezahns ermittelt. Dabei ergibt beispielsweise eine längere Periodendauer T einen höheren Spannungsmittelwert als eine kürzere Periodendauer T bzw. eine kürzere Periodendauer T einen niedrigeren Spannungsmittelwert als eine längere Periodendauer T.

Weiterhin zeigt die in Figur 3 eine Realisierungsvariante der Periodendauerreferenzeinheit PEref, durch welchen eine Referenzperiodendauer Tref bzw. eine entsprechender Referenzspannungswert zur Verfügung gestellt wird. Die Periodendauerreferenzeinheit PEref umfasst einen fünften und sechsten Widerstand R5, R6, welche mit einer Referenzspannung Uref und einem Bezugspotential verbunden sind. Zum sechsten Widerstand R6 ist weiterhin ein dritter Kondensator parallel angeordnet.

Die Referenzperiodendauer Tref bzw. der entsprechende Referenzspannungswert wird dann der Reglereinheit PI - z.B. einem Proportional-Intergral-Regler bzw. PI-Regler - als Sollwert zugeführt. Weiterhin wird dem PI-Regler PI die aktuelle Periodendauer T bzw. der von der von der aktuellen Periodendauer T abhängige, analoge Spannungsmittelwert als Istwert zugeführt. Vom PI-Regler PI werden diese beiden Werte verglichen und daraus die Steuergröße SG abgeleitet und mit dem Verstärkungsfaktor K, welcher von der Dimensionierung der Reglereinheit PI abhängt, verstärkt. Die Steuergröße SG wird dann an die Schaltreglereinheit RE weitergeleitet, um beispielsweise eine Neigung bzw. der Rampe des Sägezahnsignals des Oszillators OS in Abhängigkeit von einer aktuellen Veränderung der Periodendauer T zu beeinflussen. Weiterhin wird an den Eingang des PI-Reglers PI, welchem die aktuelle Periodendauer T zugeführt wird, die Steuergröße SG über einen siebten Widerstand R7 als Rückkopplung zurückgeführt, um den Regelkreis zu schließen.

Alternativ kann mittels der Steuergröße SG anstatt der Neigung der Rampe des Sägezahnsignals der Oszillatoreinheit OS der Einschaltschwellwert in Abhängigkeit von der Veränderung der aktuellen Periodendauer T beeinflusst werden. Dazu kann die Steuergröße SG beispielweise invertiert werden.

Der PI-Regler PI kann beispielsweise mit Hilfe eines Operationsverstärker mit entsprechender Beschaltung (z.B. Widerstände, Kondensator) realisiert werden, wobei die Referenzperiodendauer Tref bzw. der entsprechende Spannungswert einem positiven Eingang des Operationsverstärkers zugeführt wird und die aktuelle Periodendauer T bzw. der aus der aktuellen Periodendauer T mittels Einheit zur Periodendetektion PE abgeleitete analoge Spannungsmittelwert einem invertierten Eingang des Operationsverstärkers zugeführt wird. Die Steuergröße SG wird z.B. über den siebten Widerstand R7 an den invertierten Eingang des Operationsverstärkers bzw. des PI-Reglers PI zurückgeführt.

## Patentansprüche

1. Verfahren zur Regelung eines Schaltwandlers (SN) mit zumindest einem Schaltelement in einem quasiresonanten Betrieb, wobei das zumindest eine Schaltelement in einem eingeregelten Zustand des Schaltwandlers (SN) mit einer vorgegebenen, stabilen Schaltfrequenz geschaltet wird, und wobei Einschaltzeitpunkte des zumindest einen Schaltelements durch ein Schaltsignal (PWM) vorgegeben werden, welches durch Erreichen eines Einschaltschwellwerts durch ein mit einem Valley-Erkennungssignal (V) beaufschlagtes Sägezahnsignal erzeugt wird, wobei durch das Valley-Erkennungssignal (V) ein jeweiliger Einschaltzeitpunkt des zumindest einen Schaltelements in ein Valley einer am abgeschalteten Schaltelement anliegenden, schwingenden Spannung fällt, ***dadurch gekennzeichnet, dass*** eine aktuelle Periodendauer (T) des Schaltsignals (PWM) ermittelt wird (101), dass die ermittelte, aktuelle Periodendauer (T) des Schaltsignals (PWM) mit einer vorgegebenen Referenzperiodendauer (Tref) verglichen wird (102), dass aus einem Vergleich der ermittelten, aktuellen Periodendauer (T) mit der Referenzperiodendauer (Tref) eine Steuergröße (SG) abgeleitet wird (103), und dass bei Veränderung einer Last am Ausgang des Schaltwandlers (SN) von der Steuergröße (SG) ein Abstand zwischen dem mit dem Valley-Erkennungssignal (V) beaufschlagten Sägezahnsignal und dem Einschaltschwellwert solange verändert wird (104), bis anhand der ermittelten, aktuellen Periodendauer (T) ein Erreichen der vorgegebene, stabilen Schaltfrequenz festgestellt wird (105).

2. Verfahren nach Anspruch 1, ***dadurch gekennzeichnet, dass*** eine Veränderung des Abstands zwischen dem mit dem Valley-Erkennungssignal (V) beaufschlagten Sägezahnsignal und dem Einschaltschwellwert durch die Steuergröße (SG) proportional zur Veränderung der Last am Ausgang des Schaltwandlers (SN) durchgeführt wird (104).

3. Verfahren nach einem der Ansprüche 1 bis 2, ***dadurch gekennzeichnet, dass*** eine Veränderung des Abstands zwischen dem mit dem Valley-Erkennungssignal (V) beaufschlagten Sägezahnsignal und dem Einschaltschwellwert durch Veränderung einer Steigung einer Rampe des Sägezahnsignals in Abhängigkeit von der Steuergröße (SG) durchgeführt wird (104) .

4. Verfahren nach einem der Ansprüche 1 bis 2, ***dadurch gekennzeichnet, dass*** eine Veränderung des Abstands zwischen dem mit dem Valley-Erkennungssignal (V) beaufschlagten Sägezahnsignal und dem Einschaltschwellwert durch Veränderung des Einschaltschwellwertes in Abhängigkeit von der Steuergröße (SG) durchgeführt wird (104).

5. Verfahren nach einem der vorangegangenen Ansprüche,
***dadurch gekennzeichnet, dass*** die Steuergröße (SG) bei Erreichen der vorgegebenen, stabilen Schaltfrequenz auf einen vorgegebenen Ausgangswert zurückgesetzt wird (106).

6. Verfahren nach einem der vorangegangenen Ansprüche,
***dadurch gekennzeichnet, dass*** die aktuelle Periodendauer (T) des Schaltsignals (PWM) in Form eines Digitalwerts oder Analogwerts ermittelt wird (101).

7. System zur Regelung eines Schaltwandlers (SN) mit zumindest einem Schaltelement, welcher in einem quasiresonanten Betrieb betrieben wird, und wobei das zumindest eine Schaltelement in einem eingeregelten Zustand des Schaltwandlers (SN) mit einer vorgegebenen stabilen Schaltfrequenz geschaltet wird, zumindest umfassend:
- eine Schaltreglereinheit (RE) zum Erzeugen eines Schaltsignals (PWM), welche dazu ausgebildet ist, dem zumindest einen Schaltelement des Schaltreglers (SN) Einschaltzeitpunkte vorzugeben, wobei die Schaltreglereinheit (RE) eine Oszillatoreinheit (OS) zum Generieren eines Sägezahnsignals aufweist, welches zum Generieren des Schaltsignals (PWM) mit einem Einschaltschwellwert verglichen wird;
- eine Valley-Erkennungseinheit (VE) zum Generieren eines Valley-Erkennungssignals (V), welches dem Sägezahnsignal beaufschlagt wird, wodurch ein jeweiliger Einschaltzeitpunkt des zumindest einen Schaltelements in ein Valley einer am abgeschalteten Schaltelement anliegenden, schwingenden Spannung fällt, ***dadurch gekennzeichnet, dass*** das System weiterhin aufweist:
- eine Einheit zur Periodendauerdetektion (PE), welche dazu eingerichtet ist, eine aktuelle Periodendauer (T) des Schaltsignals (PWM) zu ermitteln;
- eine Periodendauerreferenzeinheit (PEref) zum Vorgeben einer Referenzperiodendauer (Tref); und
- eine Reglereinheit (PI), welche dazu eingerichtet ist, aus der aktuellen, von der Einheit zur Periodendauerdetektion (PE) ermittelten Periodendauer (T) und der Referenzperiodendauer (Tref) der Periodendauerreferenzeinheit (PEref), eine Steuergröße (SG) zum Verändern eines Abstands zwischen dem mit dem Valley-Erkennungssignal (V) beaufschlagten Sägezahnsignal und dem Einschaltschwellwert zu erzeugen.

8. System nach Anspruch 7, ***dadurch gekennzeichnet, dass*** die Einheit zur Periodendetektion (PE) mit Hilfe eines Mikrokontrollers oder eines Frequenz-Spannungswandlers realisiert ist.

9. System nach Anspruch 7, ***dadurch gekennzeichnet, dass*** die Einheit zur Periodendetektion (PE) als Analogschaltung realisiert ist, welche dazu eingerichtet ist, die aktuelle Periodendauer (T) des Schaltsignals (PWM) als Analogspannungsmittelwert einer zum Sägezahnsignal der Schaltreglereinheit (RE) synchronen, sägezahnförmigen Hilfsspannung zu bestimmen.

10. System nach einem der Ansprüche 7 bis 9, ***dadurch gekennzeichnet, dass*** die Reglereinheit (PI) als Proportional-Integral-Regler ausgeführt ist.

## Claims

1. Method for regulating a switching converter (SN) having at least one switching element in a quasi-resonant operation, wherein the at least one switching element is switched in a regulated state of the switching converter (SN) at a predetermined stable switching frequency, and wherein switch-on points in time of the at least one switching element are predetermined by a switching signal (PWM) that is generated owing to a sawtooth signal, which is influenced with a valley-identifying signal, reaching a switch-on threshold value, wherein owing to the valley-identifying signal (V) a respective switch-on point in time of the at least one switching element falls in a valley of an oscillating voltage that is prevailing at the switched-off switching element, ***characterised in that*** a prevailing period duration (T) of the switching signal (PWM) is determined (101), that the determined prevailing period duration (T) of the switching signal (PWM) is compared with a predetermined reference period duration (Tref) (102), that a control variable (SG) is derived from a comparison of the determined prevailing period duration (T) with the reference period duration (Tref) (103), and that in the case of a change in the load at the output of the switching converter (SN) by the control variable (SG) a gap between the sawtooth signal, which is influenced with the valley-identifying signal (V), and the switch-on threshold value is changed (104) until with reference to the determined prevailing period duration (T) it is ascertained that the predetermined stable switching frequency is reached (105).

2. Method according to claim 1, ***characterised in that*** the gap between the sawtooth signal, which is influenced with the valley-identifying signal (V), and the switch-on threshold value is changed by the control variable (SG) in proportion with the change in the load at the output of the switching converter (SN) (104).

3. Method according to one of claims 1 to 2, ***characterised in that*** the gap between the sawtooth signal, which is influenced with the valley-identifying signal (V), and the switch-on threshold value is changed by changing a gradient of a ramp of the sawtooth signal in dependence upon the control variable (SG) (104).

4. Method according to one of claims 1 to 2, ***characterised in that*** the gap between the sawtooth signal, which is influenced with the valley-identifying signal (V), and the switch-on threshold value is changed by changing the switch-on threshold value in dependence upon the control variable (SG) (104).

5. Method according to one of the preceding claims,
***characterised in that*** the control variable (SG) is reset to a predetermined output value when the predetermined stable switching frequency is reached (106).

6. Method according to one of the preceding claims,
***characterised in that*** the prevailing period duration (T) of the switching signal (PWM) is determined in the form of a digital value or analogue value (101).

7. System for regulating a switching converter (SN) having at least one switching element that is operated in a quasi-resonant operation, and wherein the at least one switching element is switched in a regulated state of the switching converter (SN) at a predetermined stable switching frequency, at least comprising:
- a switching regulating unit (RE) for generating a switching signal (PWM) which is embodied to predetermine switch-on points in time for the at least one switching element of the switching regulator (SN), wherein the switching regulating unit (RE) has an oscillator unit (OS) for generating a sawtooth signal that is compared with a switch-on threshold value so as to generate the switching signal (PWM);
- a valley-identifying unit (VE) for generating a valley-identifying signal (V) that influences the sawtooth signal whereby a respective switch-on point in time of the at least one switching element falls in a valley of an oscillating voltage that is prevailing at the switched-off switching element, ***characterised in that*** the system furthermore has:
- a unit for detecting the period duration (PE) which is designed to determine a prevailing period duration (T) of the switching signal (PWM);
- a period duration reference unit (PEref) for predetermining a reference period duration (Tref); and
- a regulating unit (PI) which is designed to generate a control variable (SG) from the prevailing period duration (T), which is determined by the unit for detecting the period duration (PE), and the reference period duration (Tref) of the period duration reference unit (PEref) so as to change a gap between the sawtooth signal, which is influenced with the valley identifying signal (V), and the switch-on threshold value.

8. System according to claim 7, ***characterised in that*** the unit for detecting the period (PE) is realised with the aid of a microcontroller or a frequency voltage converter.

9. System according to claim 7, ***characterised in that*** the unit for detecting the period (PE) is realised as an analogue circuit which is designed to determine the prevailing period duration (T) of the switching signal (PWM) as an analogue voltage average value of a sawtooth-like auxiliary voltage that is synchronous with respect to the sawtooth signal of the switching regulating unit (RE).

10. System according to one of claims 7 to 9, ***characterised in that*** the regulating unit (PI) is embodied as a proportional integral controller.

## Revendications

1. Procédé permettant le réglage d'un convertisseur de commutation (SN) avec au moins un élément de commutation dans un fonctionnement en quasi-résonance, dans lequel l'au moins un élément de commutation est commuté dans un état réglé du convertisseur de commutation (SN) avec une fréquence de commutation stable prédéfinie, et dans lequel des moments d'activation de l'au moins un élément de commutation sont prédéfinis par le biais d'un signal de commutation (PWM), lequel est généré lorsqu'une valeur seuil d'activation est atteinte par le biais d'un signal en dents de scie alimenté avec un signal de reconnaissance de creux (V), dans lequel par le biais du signal de reconnaissance de creux (V) un moment d'activation respectif de l'au moins un élément de commutation s'inscrit dans un creux d'une tension oscillante appliquée à l'élément de commutation désactivé, ***caractérisé en ce qu***'une durée de période (T) actuelle du signal de commutation (PWM) est déterminée (101), en ce que la durée de période (T) actuelle déterminée du signal de commutation (PWM) est comparée à une durée de période de référence prédéfinie (Tref) (102), en ce qu'à partir d'une comparaison des durées de période (T) actuelles déterminées à la durée de période de référence (Tref) une grandeur de mesure (SG) est déduite (103), et en ce que lors de la modification d'une charge au niveau de la sortie du convertisseur de commutation (SN) de la grandeur de commande (SG) un écart entre le signal en dents de scie alimenté avec le signal de reconnaissance de creux (V) et la valeur seuil d'activation est modifié (104) jusqu'à ce que le fait d'atteindre la fréquence de commutation stable prédéfinie à l'aide de la durée de période (T) actuelle déterminée soit constaté (105).

2. Procédé selon la revendication 1, ***caractérisé en ce qu***'une modification de l'écart entre le signal en dents de scie alimenté avec le signal de reconnaissance de creux (V) et la valeur seuil d'activation est effectuée (104) par le biais de la grandeur de commande (SG) proportionnellement à la modification de la charge au niveau de la sortie du convertisseur de commutation (SN).

3. Procédé selon l'une quelconque des revendications 1 à 2, ***caractérisé en ce qu***'une modification de l'écart entre le signal en dents de scie alimenté avec le signal de reconnaissance de creux (V) et la valeur seuil d'activation est effectuée (104) par le biais d'une modification d'une inclinaison d'une rampe du signal en dents de scie en fonction de la grandeur de commande (SG).

4. Procédé selon l'une quelconque des revendications 1 à 2, ***caractérisé* en ce qu'**une modification de l'écart entre le signal en dents de scie alimenté avec le signal de reconnaissance de creux (V) et la valeur seuil d'activation est effectuée (104) par le biais d'une modification de la valeur seuil d'activation en fonction de la grandeur de commande (SG).

5. Procédé selon l'une quelconque des revendications précédentes, ***caractérisé en ce que*** la grandeur de commande (SG) est réinitialisée (106) lorsque la fréquence de commutation stable prédéfinie atteint une valeur de départ prédéfinie.

6. Procédé selon l'une quelconque des revendications précédentes, ***caractérisé en ce que*** la durée de période (T) actuelle du signal de commutation (PWM) est déterminée (101) sous la forme d'une valeur numérique ou d'une valeur analogique.

7. Système permettant le réglage d'un convertisseur de commutation (SN) avec au moins un élément de commutation, lequel fonctionne dans un fonctionnement en quasi-résonance, et dans lequel l'au moins un élément de commutation est commuté dans un état réglé du convertisseur de commutation (SN) avec une fréquence de commutation stable prédéfinie, comprenant au moins :
- une unité de réglage de commutation (RE) permettant la génération d'un signal de commutation (PWM), laquelle est formée pour déterminer des moments d'activation de l'au moins un élément de commutation du régulateur de commutation (SN), dans lequel l'unité de réglage de commutation (RE) présente une unité d'oscillation (OS) permettant de générer un signal en dents de scie, lequel est comparé à une valeur seuil de signal d'activation pour la génération du signal de commutation (PWM) ;
- une unité de reconnaissance de creux (VE) permettant la génération d'un signal de reconnaissance de creux (V), lequel alimente le signal en dents de scie, moyennant quoi un moment de commutation respectif de l'au moins un élément de commutation s'inscrit dans un creux d'une tension oscillante appliquée à l'élément de commutation désactivé, ***caractérisé en ce que*** le système présente en outre :
- une unité permettant la détection de durées de périodes (PE), laquelle est conçue pour déterminer une durée de période (T) actuelle du signal de commutation (PWM) ;
- une unité de référence de durée de période (PEref) permettant de prédéterminer une durée de période de référence (Tref) ; et
- une unité de réglage (PI) qui est conçue pour générer, à partir de la durée de période (T) actuelle déterminée par l'unité permettant la détection de durées de périodes (PE) et de la durée de période de référence (Tref) de l'unité de référence de durée de période (PEref), une grandeur de commande (SG) permettant la modification d'un écart entre le signal en dents de scie alimenté avec le signal de reconnaissance de creux (V) et la valeur seuil d'activation.

8. Système selon la revendication 7, ***caractérisé en ce que*** l'unité permettant la détection de périodes (PE) est réalisée à l'aide d'un microcontrôleur ou d'un convertisseur de fréquence-tension.

9. Système selon la revendication 7, ***caractérisé en ce que*** l'unité permettant la détection de périodes (PE) est réalisée en tant que commutation analogique, laquelle est conçue pour déterminer la durée de période (T) actuelle du signal de commutation (PWM) en tant que valeur moyenne de tension analogique d'une tension auxiliaire en forme de dents de scie synchrone par rapport à un signal en dents de scie de l'unité de réglage de commutation (RE).

10. Système selon l'une quelconque des revendications 7 à 9, ***caractérisé en ce que*** l'unité de réglage (PI) est exécutée en tant que régulateur proportionnel-intégral.
